# EUROPEAN PATENT SPECIFICATION

(11) **EP 3 568 993 B1**
(45) Date of publication and mention of the grant of the patent: **26.01.2022**
(21) Application number: 18763641.0
(22) Date of filing: 08.03.2018
(51) Int. Cl.: H04N 21/485, H04N 21/422, G06T 7/00, H04N 5/20, H04N 21/431, H04N 5/445, H04N 21/81, H04N 21/45, H04N 21/44

(54) **DISPLAY DEVICE FOR RECOGNIZING USER INTERFACE AND CONTROLLING METHOD THEREOF**
ANZEIGEVORRICHTUNG ZUR ERKENNUNG EINER BENUTZEROBERFLÄCHE UND STEUERUNGSVERFAHREN DAFÜR
DISPOSITIF D'AFFICHAGE POUR RECONNAÎTRE UNE INTERFACE UTILISATEUR ET SON PROCÉDÉ DE COMMANDE

(30) Priority: 08.03.2017 KR 20170029691
(43) Date of publication of application: 20.11.2019
(73) Proprietor: Samsung Electronics Co., Ltd., Suwon-si, Gyeonggi-do 16677 (KR)
(72) Inventor: KWON, Oh In, Seoul 05532 (KR)
(74) Representative: Walaski, Jan Filip
(86) International application number: PCT/KR2018/002793
(87) International publication number: WO 2018/164519

(56) References cited:
- EP-A2- 0 725 362
- JP-A- 2014 072 699
- KR-A- 20100 038 981
- US-A1- 2002 040 474
- US-A1- 2009 180 025
- US-A1- 2010 199 299
- US-A1- 2015 089 526
- US-A1- 2015 242 698
- US-A1- 2015 242 698
- US-A1- 2017 064 375
- US-A1- 2017 064 375
- US-B1- 6 408 089

## Description

Apparatuses, devices, methods, and articles of manufacture consistent with the present disclosure relate to a display device for recognizing a user interface blended with a received broadcast image, and a controlling method of the display device.

As various types of electronic devices are developed for use with a broadcast technology and an Internet communication technology, various types of content may be provided to a user. In particular, as mobile devices, such as a notebook personal computer (PC), a smartphone, or a tablet PC, are developed, content may be directly provided to the user.

As the mobile device is used, different types of content may be provided to a plurality of users by using user information of the mobile device, rather than unilaterally providing the same content to each of the users.

The above information is presented as background information only to assist with an understanding of the present disclosure. No determination has been made, and no assertion is made, as to whether any of the above might be applicable as prior art with regard to the present disclosure.

US 2017/0064375 discloses a display device that detects an On-Screen Display (OSD) overlaid on an image in an image section without receiving preliminary information on the form of the OSD from an external source. It furthers generates an OSD template including location information or form information associated with the detected OSD, and stores the generated OSD template in the storage.

US 2015/0242698 discloses a video processing method for identifying images and/or regions of images having blended graphics, i.e. a logo. In particular, a particular pixel is determined as being part of an overlaid logo if the pixel value of the pixel is closer to the predicted pixel value of a pixel in the logo than to the predicted pixel value of a background pixel.

In the related art, when a display device receives a broadcast image, in which a user interface (UI) image is blended, from a broadcast receiving device, the display device may fail to recognize a UI image region in the broadcast image. Accordingly, when the display device provides a different service for a user through a display, the display device may restrict undesirably a user experience (UX) through the UI by displaying a different image on the UI image region in the broadcast image.

Aspects of the present disclosure address at least the above-mentioned problems and/or disadvantages and to provide at least the advantages described below.

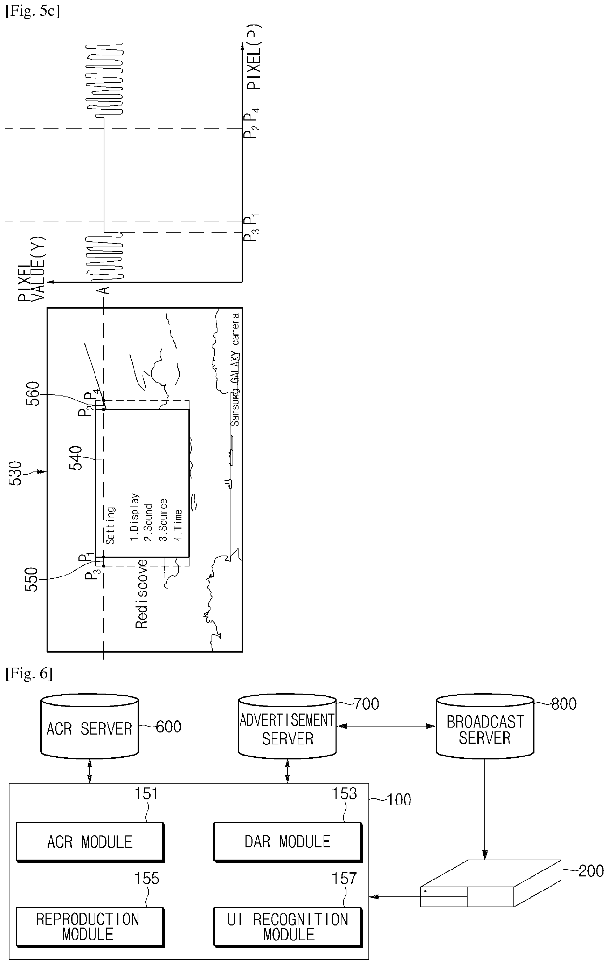

The present invention is as defined by the appended independent claims, which find support in pars 79, 85-87, and figure 6. The remaining embodiments described in the description are to be construed within the limitations of the independent claims.

Accordingly, an aspect of the present disclosure is to provide a display device which identifies a UI image region in a broadcast image received from a broadcast receiving device, in response to receiving a control signal, which is for controlling the broadcast receiving device, from a remote control device, thereby preventing a UX through a UI from being restricted.

According to an aspect of the invention, there is provided a display device as set out in claim 1. According to another aspect of the invention, there is provided a method as set out in claim 9 . It is an aspect to provide a display device which identifies a user interface (UI) image region in a broadcast image received from a broadcast receiving device, in response to receiving a control signal, which is for controlling the broadcast receiving device, from a remote control device, thereby preventing a user experience (UX) through a UI from being restricted.

According to an aspect of one or more exemplary embodiments, there is provided a display device comprising a communication interface connected with an external electronic device; a display configured to display a broadcast image received from the external electronic device; a memory; and a processor configured to process the broadcast image received from the external electronic device, the processor configured to receive a control signal that is for controlling the external electronic device; determine a user interface (UI) image region of the broadcast image, based on a noise level of the broadcast image displayed on the display, in response to receiving the control signal; and store information on the UI image region, which corresponds to the control signal, in the memory.

According to another aspect of one or more exemplary embodiments, there is provided a method comprising receiving, by a display device, a control signal that is for controlling an external electronic device; determining, by the display device, a UI image region in a broadcast image, based on a noise level of a broadcast image displayed on a display of the display device, in response to receiving the control signal; and storing, by the display device, information on the UI image region, which corresponds to the control signal, in a memory of the display device.

According to another aspect of one or more exemplary embodiments, there is provided a non-transitory computer-readable recording medium recording program code that, when executed by a computer, implements a method including operations of receiving a control signal that is for controlling an external electronic device; determining a user interface (UI) image region of a broadcast image, based a noise level of the broadcast image displayed on a display, in response to receiving the control signal; and storing information on the UI image region, which corresponds to the control signal, in a memory.

According to various exemplary embodiments, a display device calculates a noise level by using a spatial frequency of a broadcast image received from a broadcast server in response to receiving a control signal, which is for controlling a broadcast receiving device, from a remote control device, determines a UI image region in the broadcast image by identifying a region having a threshold level or less from the broadcast image, and stores information on the UI image region by matching the information on the UI image with the control signal. Accordingly, in response to the control signal being transmitted from the remote control device, the display device may provide various services to the user through the display without restricting the UX through the UI by recognizing the UI image region in the broadcast image.

Other aspects, advantages, and salient features of the disclosure will become apparent to those skilled in the art from the following detailed description, which, taken in conjunction with the annexed drawings, discloses various exemplary embodiments.

### Brief Description of Drawings

The above and other aspects will be more apparent from the following description taken in conjunction with the accompanying drawings, in which:
FIG. 1 is a view illustrating a display system, according to various exemplary embodiments;
FIG. 2 is a block diagram illustrating elements of a display device, according to an exemplary embodiment;
FIGS. 3a to 3c are views illustrating a method of determining a UI image region in a broadcast image in a display device, according to an exemplary embodiment;
FIG. 4 is a view illustrating a method of determining a region, in which a UI image is blended, by passing an image of a display device through a high pass filter, according to an exemplary embodiment;
FIGS. 5a-5c illustrate a method of determining a region, in which a UI image is blended, by using images of a display device, which are captured at a plurality of time points, according to an exemplary embodiment;
FIG. 6 is a view illustrating a system for providing a substitutional advertisement, according to various exemplary embodiments; and
FIG. 7 is a flowchart illustrating a control method of a display device, according to various exemplary embodiments.

### Mode for the Invention

Hereinafter, various exemplary embodiments of the present disclosure may be described with reference to the accompanying drawings. Accordingly, those of ordinary skill in the art should understand that the present disclosure is not limited to a specific exemplary embodiment, but various modifications, equivalents, and/or alternatives of the exemplary embodiments of the present disclosure are included in the present disclosure. In the following description made with respect to the accompanying drawings, similar elements will be assigned with similar reference numerals.

In the related art, when a display device receives a broadcast image, in which a user interface (UI) image is blended, from a broadcast receiving device, the display device may fail to recognize a UI image region in the broadcast image. Accordingly, when the display device provides a different service for a user through a display, the display device may restrict undesirably a user experience (UX) through the UI by displaying a different image on the UI image region in the broadcast image.

Aspects of the present disclosure address at least the above-mentioned problems and/ or disadvantages and to provide at least the advantages described below. Accordingly, an aspect of the present disclosure is to provide a display device which identifies a UI image region in a broadcast image received from a broadcast receiving device, in response to receiving a control signal, which is for controlling the broadcast receiving device, from a remote control device, thereby preventing a UX through a UI from being restricted.

According to various exemplary embodiments, a display device calculates a noise level by using a spatial frequency of a broadcast image received from a broadcast server in response to receiving a control signal, which is for controlling a broadcast receiving device, from a remote control device, determines a UI image region in the broadcast image by identifying a region having a threshold level or less from the broadcast image, and stores information on the UI image region by matching the information on the UI image with the control signal. Accordingly, in response to the control signal being transmitted from the remote control device, the display device may provide various services to the user through the display without restricting the UX through the UI by recognizing the UI image region in the broadcast image.

Other aspects, advantages, and salient features of the disclosure will become apparent to those skilled in the art from the following detailed description, which, taken in conjunction with the annexed drawings, discloses various exemplary embodiments.

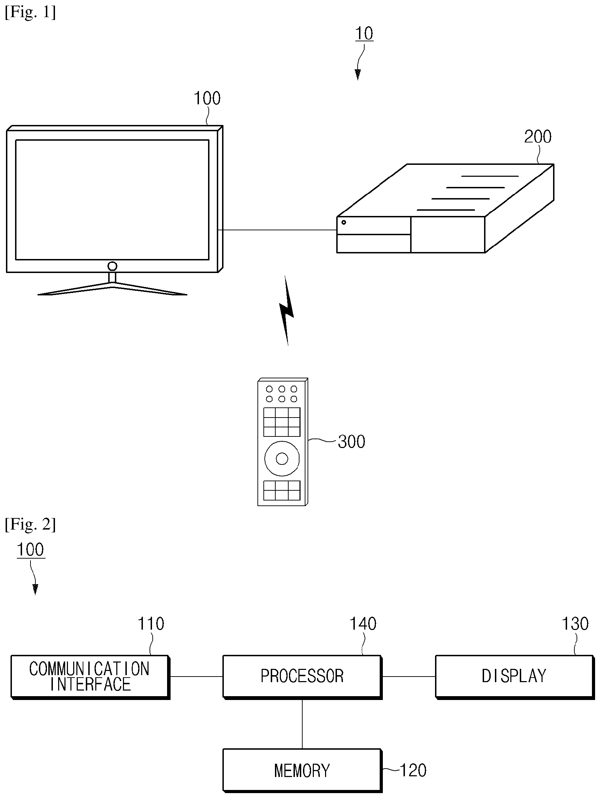

FIG. 1 is a view illustrating a display system, according to various exemplary embodiments.

Referring to FIG. 1, a display system 10 may include a display device 100, a broadcast receiving device (or an external electronic device) 200, and a remote control device 300. The display device 100 may reproduce content and an advertisement transmitted from the broadcast receiving device 200. The content and the advertisement may each include an image (e.g., a video image) and an audio signal.

According to an exemplary embodiment, the display device 100 may receive a broadcast image from the broadcast receiving device 200. For example, the display device 100 may be connected with the broadcast receiving device 200 through a wired interface (e.g., a high definition multimedia interface (HDMI), a digital video/visual interactive (DVI), a video graphics array (VGA), a display port, or the like) or through a wireless interface (e.g., a wireless-fidelity (Wi-Fi), a wireless HD (WiHD), a wireless gigabit (Wigig), or the like) to receive the broadcast image. That is, the solid line between the display device 100 and the broadcast receiving device 200 in FIG. 1 may indicate a wired or wireless connection between the display device and the broadcast receiving device 200. The broadcast image may include, for example, a content (e.g., a broadcast program) image or an advertisement image. According to an exemplary embodiment, the display device 100 may display the broadcast image on a display.

According to an exemplary embodiment, the display device 100 may receive a control signal, which is for controlling the broadcast receiving device 200, from the remote control device 300. For example, the display device 100 may perform snooping for the control signal transmitted from the remote control device 300 to the broadcast receiving device 200. Alternatively, the display device 100 may receive the control signal from the remote control device 300 to control the broadcast receiving device 200 through the display device 100, for example in an HDMI or DVI implementation in which control by one device by another is implemented. Accordingly, the display device 100 may recognize that the control signal from the remote control device 300 to the broadcast receiving device 200 is generated.

According to an exemplary embodiment, the display device 100 may be implemented with various devices which receive content from an external device, such as a TV, a desktop computer, a laptop PC, a smart phone, a tablet PC, a monitor, an electronic frame, or the like and display the content on a display.

According to an exemplary embodiment, the broadcast receiving device 200 may transmit the broadcast image to the display device 100. For example, the broadcast receiving device 200 may receive the broadcast image from a broadcast server. The broadcast receiving device 200 may be connected with the broadcast server through a communication network (e.g., a radio frequency (RF) communication network or an IP communication network) to receive the broadcast image. According to an exemplary embodiment, the broadcast receiving device 200 may blend the UI image with the received broadcast image and may transmit the blended broadcast image to the display device 100 for display. For example, in response to receiving a control signal corresponding to a user input from the remote control device 300, the broadcast receiving device 200 may blend a UI image corresponding to the control signal with the broadcast image and may transmit the blended image to the display device 100.

According to an exemplary embodiment, the broadcast receiving device 200 may be implemented with various devices, such as, for example, a set-top box, which receive and/or store broadcast content and transmit the broadcast content to the display device 100.

According to an exemplary embodiment, the remote control device 300 may receive a user input and may transmit a control signal corresponding to the received user input to the broadcast receiving device 200. For example, the remote control device 300 may transmit the control signal to the broadcast receiving device 200 through a short-range wireless communication interface such as, for example, a Bluetooth, a near field communication, or an infrared ray transceiver interface, etc. According to an exemplary embodiment, the remote control device 300 may include one or more of at least one button, a touch panel, a motion recognition sensor, or a voice recognition sensor to receive the user input.

In a related art display device 100, when receiving a broadcast image, in which a UI image is blended, from the broadcast receiving device 200, the display device 100 may fail to recognize a UI image region (e.g., a region in which the UI image is blended) of the broadcast image. Accordingly, the display device 100 may restrict a UX through the UI by displaying a different image (e.g., a substitutional advertisement image) on the UI image region in the broadcast image, when providing a difference service (e.g., a substitutional advertisement service) for the user through the display. According to various exemplary embodiments, the display device 100 may prevent the UX through the UI from being restricted by identifying the UI image region in the broadcast image received from the broadcast receiving device 200, in response to the control signal, which is for controlling the broadcast receiving device 200, is received from the remote control device 300.

FIG. 2 is a block diagram illustrating elements of a display device, according to an exemplary embodiment.

Referring to FIG. 2, the display device 100 may include a communication interface 110, a memory 120, a display 130, and a processor 140.

According to an exemplary embodiment, the communication interface 110 may be connected with an external device and may transceive data. For example, the communication interface 110 may be connected with the broadcast receiving device 200 and may receive a broadcast image from the broadcast receiving device 200. For another example, the communication interface 110 may be connected with the remote control device 300 and may receive a control signal that is for controlling the broadcast receiving device 200 (see FIG. 1). In other words, the communication interface 110 may snoop a control signal that is not necessarily intended for (e.g., for controlling) the display device 100.

According to an exemplary embodiment, the memory 120 may store information created by analyzing a broadcast image displayed on the display 130. For example, the memory 120 may store information on a UI image blended in the broadcast image. For example, the information on the UI image region in the broadcast image may be stored through matching with the control signal corresponding to the UI image.

According to an exemplary embodiment, the display 130 may display an image received from an external device. For example, the display 130 may display a broadcast image (e.g., a content image or an advertisement image) received from the broadcast receiving device 200. For example, the broadcast image may include an image in which the UI image is blended.

According to an exemplary embodiment, the processor 140 may control the overall operation of the display device 100. The processor 140 may include at least one central processing unit (CPU) and/or at least one microprocessor. For example, the processor 140 may display a broadcast image, which is received from the external device, on the display 130 by controlling the communication interface 110, the memory 120, and the display 130.

According to an exemplary embodiment, the processor 140 may control the display 130 to display the broadcast image, which is received from the broadcast receiving device 200, on the display 130. For example, the processor 140 may receive a broadcast image, in which the UI image is blended, from the broadcast receiving device 200 and may display the broadcast image on the display 130. For example, the broadcast receiving device 200 may blend the UI image corresponding to the control signal received from the remote control device 300 with a broadcast image and may transmit the blending result to the display device 100.

According to an exemplary embodiment, the processor 140 may receive the control signal that is for controlling the broadcast receiving device 200. For example, the processor 140 may receive the control signal, which is transmitted to control the broadcast receiving device 200, from the remote control device 300. According to an exemplary embodiment, the processor 140 may distinguish control signals, which are transmitted between the remote control device 300 and the broadcast receiving device 200 and received, depending on mutually different user inputs by recognizing codes (e.g., an IR code) included in the received control signals.

According to an exemplary embodiment, when receiving the control signal that is for controlling the broadcast receiving device 200 from the remote control device 300, the display device 100 may display, on the display 130, the broadcast image in which the UI image corresponding to the control signal is blended. For example, the broadcast receiving device 200 may receive the control signal from the remote control device 300, may blend the UI image corresponding to the control signal with the broadcast image, and may transmit the blended result to the display device 100 within a short time (e.g., 0.1 sec.). Accordingly, the display device 100 may create information on the UI image blended in the broadcast image by matching the control signal received from the remote control device 300 with a broadcast image displayed on the display 130.

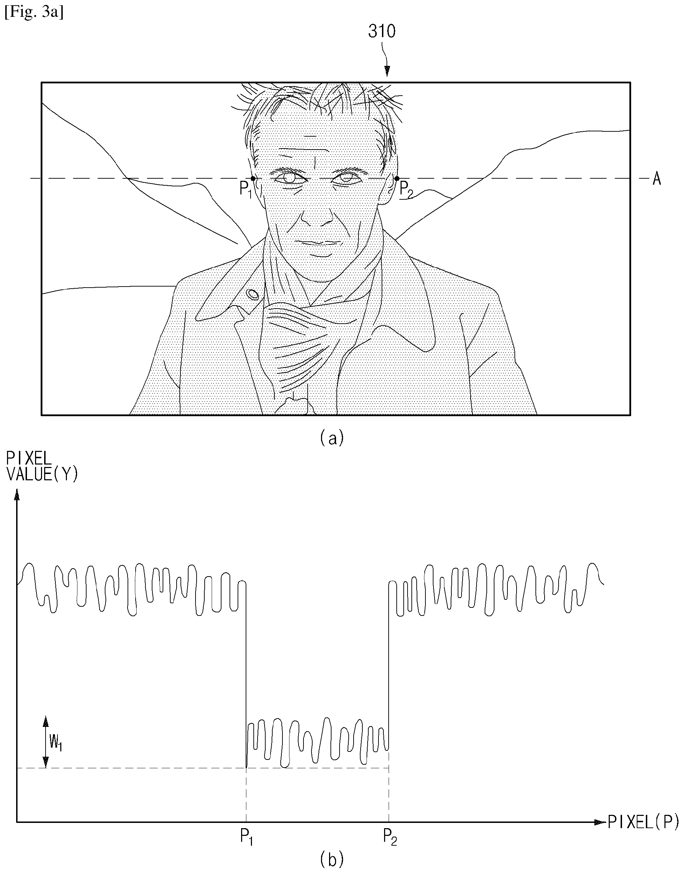

According to an exemplary embodiment, the processor 140 may determine a UI image region in the broadcast image displayed on the display 130. For example, the processor 140 may capture the broadcast image displayed on the display 130 and may identify the UI image region in the captured broadcast image, thereby determining the UI image region in the broadcast image. For example, the processor 140 may capture the broadcast image displayed on the display 130 at a plurality of time points and may identify a UI image region in each of the broadcast images captured at the plurality of time points, thereby determining the UI image region in the broadcast image. According to an exemplary embodiment, the processor 140 may determine the UI image region in the broadcast image, based on a noise level of the broadcast image displayed on the display 130. The operation of determining the UI image region in the broadcast image by the processor 140 will be described below in more detail with reference to FIGS. 3a to 6.

According to an exemplary embodiment, the processor 140 may match the UI image region in the broadcast image with the control signal corresponding to the UI image and may store the matching result in the memory 120.

According to an exemplary embodiment, the processor 140 may recognize content (e.g., a volume control, a channel display, a program guide, or the like) of the UI image blended in the broadcast image by using the information on the UI image stored in the memory 120. For example, the processor 140 may determine at least one of the size and the shape of the UI image, by using information on a region in which the UI image is blended. The processor 140 may recognize the content of the UI image, based on at least one of the determined size and shape. The processor 140 may recognize the content of the UI image, by referring to a database including information (e.g., UI content, the size and the shape of the UI, or the like) on a plurality of UIs.

FIGS. 3a to 3c are views illustrating a method for determining a UI image region in a broadcast image in a display device, according to an exemplary embodiment.

Referring to FIGS. 3A to 3c, the display device 100 may capture a broadcast image displayed on the display 130 and may determine a UI image region in the captured broadcast image.

According to an exemplary embodiment, the display device 100 may calculate a spatial frequency of the captured broadcast image. For example, the display device 100 may calculate the spatial frequency of the captured broadcast image by using a pixel value (e.g., a RGB pixel value or a YUV pixel value) of each of the pixels of the captured broadcast image.

According to an exemplary embodiment, the display device 100 may calculate a noise level of the captured broadcast image by using the calculated spatial frequency. For example, the display device 100 may calculate a noise level proportional to the calculated spatial frequency. In other words, the display device 100 may determine the noise level as being high when the spatial frequency is high, and may determine the noise level as being low when the spatial frequency is low.

According to an exemplary embodiment, the display device 100 may determine the UI image region in the captured broadcast image, based on the calculated noise level. For example, the display device 100 may determine a region having a noise level calculated as being equal to or less than a sepcified level (or threshold level), as being a region of the captured broadcast image in which the UI image is blended. For example, the specified level may be set to a value sufficient to distinguish between the region in which the UI image is blended and a region in which the UI image is not blended. The specified level may be set by the manufacturer or by the user as a setting, may be set experimentally, or may be set dynamically, for example, based on content that is most often displayed.

According to an exemplary embodiment, the display device 100 may calculate spatial frequencies of the captured broadcast image according to lines (e.g., columns, rows, or the like) of pixels included in the captured broadcast image. The display device 100 may determine pixels (or the range of pixels), which represent the UI image, in each line having the relevant calculated spatial frequency, by using spatial frequencies calculated according to the lines. The display device 100 may determine the pixels representing the UI image with respect to all lines of the captured broadcast image and may determine the range of the captured broadcast image, in which the UI image is blended.

FIG. 3a shows an example in which a UI image is not blended with the broadcast image. Referring to FIG. 3a, the display device 100 may receive a broadcast image in which the UI image is not blended and may display the broadcast image on the display 130. The display device 100 may capture the broadcast image displayed on the display 130.

According to an exemplary embodiment, the display device 100 may calculate a spatial frequency by using a pixel value of a captured broadcast image 310. The display device 100 may calculate spatial frequencies for each row of pixels included in the captured broadcast image 310. For example, the display device 100 may calculate pixels values for pixels of a row A of the captured broadcast image 310 shown in (a) of FIG. 3a as the graph (b) of FIG. 3a. The pixel value may be represented as a value Y (or brightness) of YUV pixels. Y values of pixels in the region between a first pixel P1 and a second pixel P2 that depict a face of a man of the captured broadcast image 310 may be lower than Y values of remaining pixels. In addition, the variation width W of pixel values may be greater between the first pixel P1 and the second pixel P2. The display device 100 may calculate the spatial frequency of the row A by using a pixel value difference between pixels of the row A.

According to an exemplary embodiment, the display device 100 may calculate a noise level of the row A by using the calculated spatial frequency of the row A. According to an exemplary embodiment, the display device 100 may identify a region having a spatial frequency of a specified level L1 or less in the row A. Accordingly, the display device 100 may recognize that the UI image is not blended in any region of pixels included in the row A. According to an exemplary embodiment, the display device 100 may determine a region in which the UI image is blended, with respect to all rows of the captured broadcast image 310. In other words, the display device 100 may determine the region in which the UI image is blended by analyzing each of the rows of pixels of the captured broadcast image 310 in the manner described above with respect to FIG. 3a. Accordingly, the display device 100 may determine that the UI image is not blended in any region of the captured broadcast image 310.

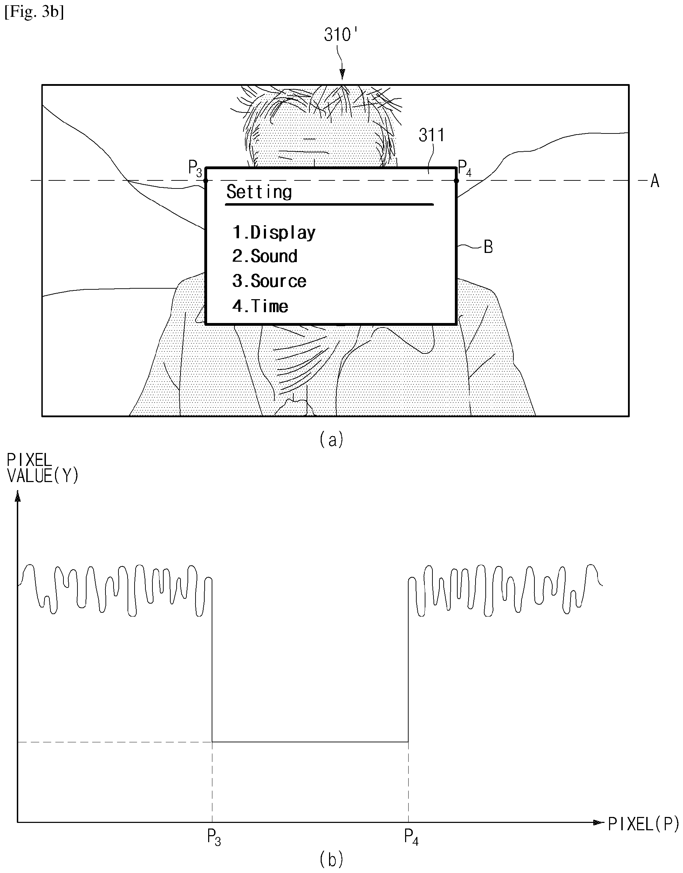

FIG. 3b shows an example in which a UI image is blended with the broadcast image. Referring to FIG. 3b, the display device 100 may capture a broadcast image 310' in which a UI image 311 is blended. A blending alpha (α) value of the UI image 311 blended in the broadcast image 310' may be 1.

According to an exemplary embodiment, the display device 100 may calculate a spatial frequency by using a pixel value of the captured broadcast image 310'. For example, the display device 100 may calculate pixels values for pixels of a row A of the captured broadcast image 310" shown in (a) of FIG. 3b as the graph of (b) of FIG. 3b. Y values of pixels in a region between a third pixel P3 and a fourth pixel P4 that correspond to the setting box shown in (a) of FIG. 3b may be lower than Y values of remaining pixels. In addition, since the UI image may be a graphic image and the blending alpha (α) value of the UI image 311 is 1, the pixel values may be consistent in the region between the third pixels P3 and the fourth pixel P4The display device 100 may calculate the spatial frequency of the row A by using a pixel value difference between the pixels of the row A.

According to an exemplary embodiment, the display device 100 may calculate a noise level of the row A by using the calculated spatial frequency of the row A. According to an exemplary embodiment, the display device 100 may identify a region having a spatial frequency of a specified level L2 or less in the row A. The threshold specified level L2 may be determined based on the blending alpha (α) value of the UI image blended in the captured broadcast image 310'. Since the blending alpha (α) value of the UI image is 1, the specified level L2 may represent a higher value as compared to the case that the blending alpha (α) value of the UI image is less than 1. Accordingly, the display device 100 may determine that the UI image is blended in the region between the third pixel P3 and the fourth pixel P4, which represents a substantially constant pixel value. According to an exemplary embodiment, the display device 100 may determine a region in which the UI image is blended, with respect to all rows of the captured broadcast image 310'. In other words, the display device 100 may determine the region in which the UI image is blended by analyzing each of the rows of pixels of the captured broadcast image 310' in the manner described above with respect to FIG. 3b. Accordingly, the display device 100 may determine that the UI image is blended in a region B.

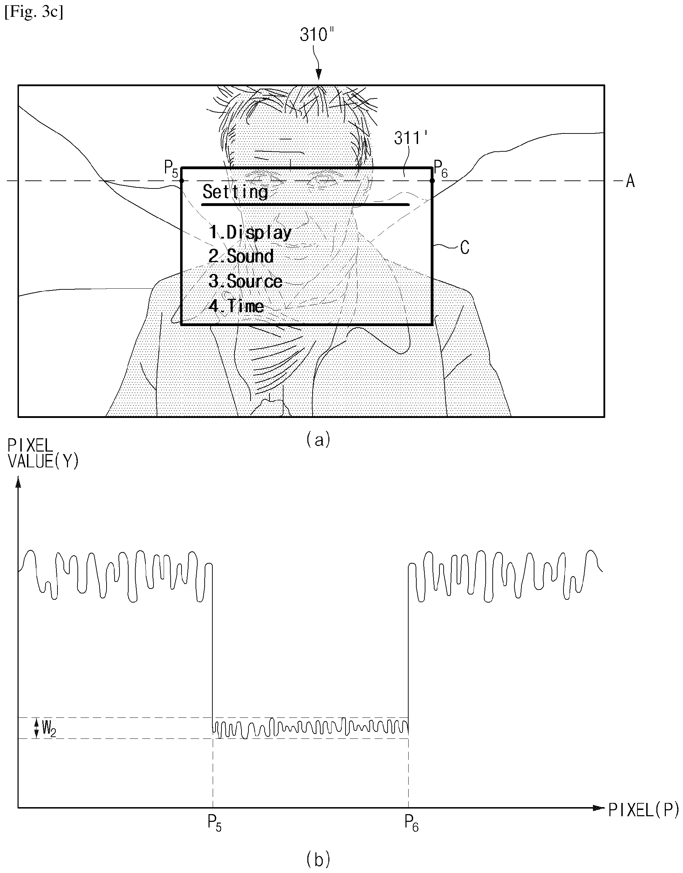

FIG. 3c shows another example in which a UI image is blended with the broadcast image. Referring to FIG. 3c, the display device 100 may capture a broadcast image 310" in which the UI image 311' is blended. The blending alpha (α) value of the UI image 311" blended in the broadcast image 310" may range from more than 0 to less than 1 (0 < α < 1)

According to an exemplary embodiment, the display device 100 may calculate a spatial frequency for each row of pixels included in the captured broadcast image 310". For example, the display device 100 may calculate pixels values for pixels of a row A of the captured broadcast image 310" shown in (a) of FIG. 3c as the graph shown in (b) of FIG. 3c. Y values of pixels in a region (or the region in which the UI image 311' is blended) between a fifth pixel P5 and a sixth pixel P6 may be lower than Y values of remaining pixels. Although the UI image 311' is a graphic image, since the blending alpha (α) value of the UI image 311' is less than 1, pixels in the region between the fifth pixel P5 and the sixth pixel P6 may represent a lower variation width W2 of pixel values as compared with the case that the blending alpha (α) value of the UI image 311' is 1, as shown in FIG. 3b. In other words, the variation width W2 of pixel values of pixels in the region between the fifth pixel P5 and the sixth pixel P6 may be narrower than the variation width W1 of the pixel value of pixels between the first pixel P1 and the second pixel P2 of FIG. 3a, but more than in FIG. 3b (the variation width being substantially 0 due to the substantially constant pixel values in the UI image of FIG. 3b as discussed above). The display device 100 may calculate the spatial frequency of the row A by using a pixel value difference between pixels of the row A.

According to an exemplary embodiment, the display device 100 may calculate a noise level of the row A by using the calculated spatial frequency of the row A. According to an exemplary embodiment, the display device 100 may identify a region having a spatial frequency of a specified level L3 or less in the row A. For example, since the blending alpha (α) value of the UI image 311' is less than 1, a specified level L3 may be lower than the specified level L2 of FIG. 3b. Accordingly, the display device 100 may determine the UI image as being blended in the region between the fifth pixel P5 and the sixth pixel P6 representing the narrower variation width of pixel values. According to an exemplary embodiment, the display device 100 may determine a region in which the UI image is blended, with respect to all rows of the captured broadcast image 310"n other words, the display device 100 may determine the region in which the UI image is blended by analyzing each of the rows of pixels of the captured broadcast image 310" in the manner described above with respect to FIG. 3c.

Accordingly, the display device 100 may determine that the UI image is blended in a region C.

The manner of calculating the UI image region in the captured broadcast image by the display device 100 may be implemented through a filter (e.g., a high pass filter (HPF) or a low pass filter (LPF)).

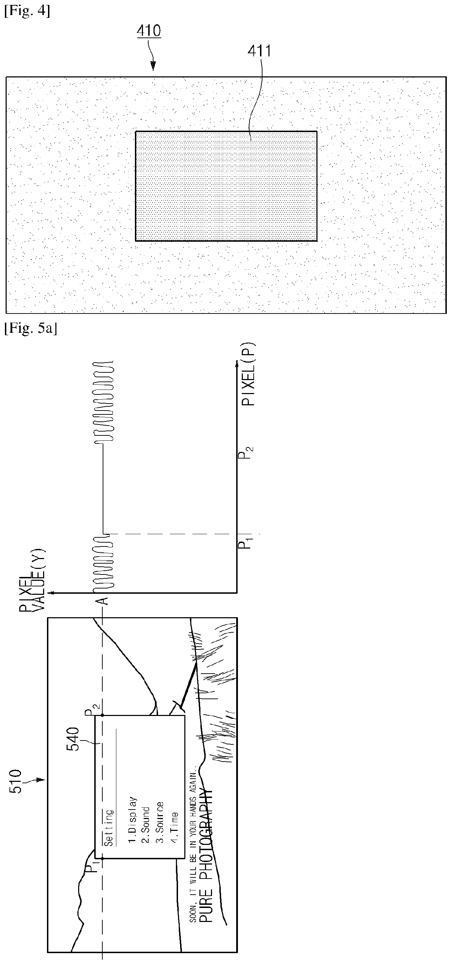

FIG. 4 is a view illustrating a method of determining a region in which the UI image is blended by passing an image of the display device through an HPF, according to an exemplary embodiment.

Referring to FIG. 4, the display device 100 may input a signal of a captured broadcast image into a HPF (or LPF) and may determine a UI image region 411 (e.g., a region in which the UI image is blended) of the captured broadcast image from an image 410 output through the HPF.

According to an exemplary embodiment, the display device 100 may transform the captured broadcast image into a signal in a frequency domain. For example, the display device 100 may transform the captured broadcast image into the signal in the frequency domain by calculating the spatial frequency of the captured broadcast image. The spatial frequency of the UI image region in the captured broadcast image may be lower than that the spatial frequency of a remaining region in which the UI image is not blended.

According to an exemplary embodiment, the display device 100 may allow the transformed image to pass through the HPF (or the LPF) and may identify a region including a spatial frequency higher (or lower, in the case of the LPF) than a specified level. A cut-off frequency of the HPF (or the LPF) may be determined based on the specified level. In other words, the cut-off frequency of the HPF may be determined as a frequency corresponding to the specified level. For example, when inputting the transformed image into the HPF, the display device 100 may determine a cut-off region (a region 411) from the image 410 output from the HPF. As another example, when inputting the transformed image into the LPF, the display device 100 may determine a passed region (the region 411) from the image 410 output from the LPF. The display device 100 may determine the passed image 411 as being the region of the transformed image, in which the UI image is blended.

Accordingly, the display device 100 may identify a region having a spatial frequency higher than (or lower than) the specified level and may determine the UI image region in the captured broadcast image.

FIGS. 5a to 5c illustrate the method of determining the region, in which the UI image is blended, by using images of the display device, which are captured at a plurality of time points, according to an exemplary embodiment.

Referring to FIGS. 5a to 5c, the display device 100 may store, in the memory 120, a UI image region in a broadcast image, which corresponds to the same control signal. The display device 100 may determine the UI image region in the broadcast image by using accumulated storage results.

According to an exemplary embodiment, the display device 100 may determine UI image regions by capturing broadcast images displayed on the display 130 at a plurality of time points, in which the same control signal is received, to store the UI image regions, which correspond to the same control signal, of the broadcast image.

According to an exemplary embodiment, in FIG. 5a, the display device 100 may receive a control signal, which is to control the broadcast receiving device 200, from the remote control device 300 at a first time point t1 and may capture a broadcast image in which a UI image corresponding to the control signal is blended. The display device 100 may calculate a spatial frequency value of a row A of a broadcast image 510 captured at the first time point t1. The display device 100 may calculate a noise level of the broadcast image 510 captured at the first time point t1 by using the calculated spatial frequency value. The display device 100 may determine that a UI image 540 is blended in a region between the first pixel P1 and the second pixel P2 by identifying a region having a noise level calculated as being equal to or less than the specified level. The display device 100 may determine a region, in which the UI image 540 is blended, with respect to remaining rows. The display device 100 may store the determined UI image region in the memory 120 by matching the determined UI image region with the control signal. In other words, the display device 100 may store the determined UI image region, which corresponds to the control signal, in the memory 120. For example, in the example shown in FIG. 5a, the display device 100 may store information on the UI image region along with information indicating a control signal of a setting UI.

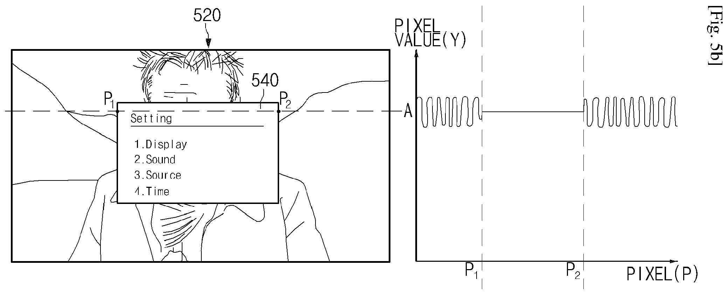

According to an exemplary embodiment, in FIG. 5b, the display device 100 may receive a control signal from the remote control device 300 at a second time point t2 and may capture a broadcast image in which a UI image corresponding to the control signal is blended. The control signal may be the same as the control signal received at the first time point t1. The display device 100 may calculate a spatial frequency value of a row A of a broadcast image 520 captured at the second time point t2. The display device 100 may calculate a noise level of the broadcast image 520 captured at the second time point t2 by using the calculated spatial frequency value. The display device 100 may determine that a UI image 540 is blended in a region between the first pixel P1 and the second pixel P2, in a similar manner to the broadcast image 510 captured at the first time point t1, by identifying a region having the calculated noise level equal to or less than the specified level. The display device 100 may determine that a UI image is blended in the same region as that of the broadcast image 510 captured at the first time point t1 by determining the noise levels for remaining rows. The display device 100 may store the determined UI image region in the memory 120 by matching the determined UI image region with the control signal that is the same as the control signal received at the first time point t1.

According to an exemplary embodiment, in FIG. 5c, the display device 100 may receive a control signal from the remote control device 300 at a third time t3 and may capture a broadcast image in which a UI image corresponding to the control signal is blended. The control signal may be the same signal as the control signal received at the first time point t1 and the second time point t2. The display device 100 may calculate a spatial frequency value of a row A of a broadcast image 530 captured at the third time t3. The display device 100 may calculate the calculated spatial frequency value. The display device 100 may calculate a noise level of the broadcast image 530 captured at the third time t3 by using the calculated spatial frequency value. Although, in this case, the region 550 between the third pixel P3 and the first pixel P1 and the region 560 between the second pixel P2 and the fourth pixel P4 are not UI image regions, signal characteristics representing the above regions may be similar to a signal characteristic of the UI image. Accordingly, the display device 100 may identify a region having the calculated noise level equal to or less than a specified level, thereby determining that the UI image 540 is blended in the region between the third pixel P3 and the fourth pixel P4, differently from the broadcast image 510 and the broadcast image 520 captured at the first time point t1 and the second time point t2. According to an exemplary embodiment, the display device 100 may determine that a UI image is blended in a region different from the region of the broadcast image 510 captured at the first time point t1 by identifying the noise levels for remaining rows. The display device 100 may store the determined UI image region in the memory 120 by matching the determined UI image region with the control signal that is the same as the control signals, which are received at the first time point t1 and the second time point t2.

According to an exemplary embodiment, the display device 100 may determine the UI image region in the broadcast image corresponding to the control signal by using accumulated results for the same control signal stored in the memory 120.

For example, when the same region is determined as being the region, in which the UI image is blended, by a specified number of times with respect to broadcast images captured at a plurality of time points, the region may be determined as being the UI image region in the broadcast image. For example, the display device 100 may determine the region between the first pixel P1 and the second pixel P2, which is identified by a specified number of times (e.g., two times) or more, as being a region in which the UI image 540 is blended.

For another example, the display device 100 may determine, as being a UI image region in the broadcast image, a common region between regions, which are determined to have the UI image blended therein, in the broadcast images captured at a plurality of time points. For example, the display device 100 may determine the UI image 540 to be blended in the region between the first pixel P1 and the second pixel P2, which is the common region between the determined regions. In other words, since the region P1 to P2 is narrower and included in the region P3 to P4, the region P1 to P2 is determined as the common region.

Accordingly, the display device 100 may determine a correct UI image region in the broadcast image by recognizing the erroneous determination for a region of the broadcast image, in which the UI image is blended, using the accumulated and stored UI image regions of the broadcast images.

FIG. 6 is a view illustrating a system for providing an substitutional advertisement, according to various exemplary embodiments.

Referring to FIG. 6, a program module (e.g., an application) included in the display device 100 may include an automatic content recognition (ACR) module 151, a dynamic advertisement replacement (DAR) module 153, a reproduction module 155, and a UI recognition module 157. The program modules may be stored in the memory 120. The program modules may include program code that may be executed by the processor 140 to perform the respective operations of the program modules. According to an exemplary embodiment, the display device 100 may receive a substitutional advertisement image from an advertisement server 700, may replace the broadcast image received from the broadcast receiving device 200 with the received substitutional advertisement image, and may display the received substitutional advertisement image on the display 130 (see also FIGS. 1 and 2).

According to an exemplary embodiment, the ACR module 151 may create image identification information based on the image displayed on the display 130. For example, the ACR module 151 may capture an image displayed on the display 130 and may create the image identification information (e.g., finger print information or watermark information) by using the captured image. For example, the ACR module 151 may reduce the captured image, may extract feature points representing the captured image, and may create finger print information. For another example, the ACR module 151 may extract an intrinsic watermark from the captured image and may create watermark information. According to an exemplary embodiment, the ACR module 151 may transmit the image identification information to the ACR server 600.

According to an exemplary embodiment, the ACR server 600 may receive the image identification information and may determine a channel corresponding to the image identification information. For example, the ACR server 600 may include a database to store the image identification information corresponding to each broadcast channel. The ACR server 600 may determine a channel (or channel information) corresponding to the image identification information by comparing image identification information received from the ACR module 151 with image identification information according to broadcast channels stored in the database.

According to an exemplary embodiment, the ACR server 600 may identify a broadcast schedule (e.g., a broadcast program schedule or an advertisement schedule) of a channel corresponding to the determined channel information. For example, the ACR server 600 may identify whether a channel corresponding to the channel information includes an alternative advertisement that can be substituted by another advertisement (e.g., a substitutional advertisement) by using broadcast schedules of a plurality of channels stored in the database. The ACR server 600 may identify information (e.g., the starting time of the advertisement or the identification information of the advertisement) on the alternative advertisement when the alternative advertisement is included in the channel corresponding to the channel information. The ACR server 600 may transmit the channel information and the information on the alternative advertisement of the channel corresponding to the channel information to the display device 100. According to an exemplary embodiment, at least a portion of operations performed by the ACR server 600 may be performed by the ACR module 151.

According to an exemplary embodiment, the DAR module 153 may transmit a request (or a substitutional advertisement request) to receive the alternative advertisement, to the advertisement server 700 when the information on the alternative advertisement is received from the ACR server 600. The substitutional advertisement request may include information for the advertisement server 700 to select the substitutional advertisement. For example, the substitutional advertisement request may include information on the alternative advertisement and user profile information (e.g., a residence, a gender, an age, an interesting field, or the like).

According to an exemplary embodiment, the advertisement server 700 may provide the substitutional advertisement (or an substitutional advertisement image) to the display device 100 in response to the request from the DAR module 153. According to an exemplary embodiment, the advertisement server 700 may select a substitutional advertisement based on at least one of information on the substitutional advertisement or information on the user profile included in the substitutional advertisement request, and may transmit the selected substitutional advertisement to the display device 100.

According to an exemplary embodiment, the reproduction module 155 may reproduce and output the substitutional advertisement received from the advertisement server 700. According to an exemplary embodiment, the reproduction module 155 may display the substitutional advertisement image on the display 130. For example, the reproduction module 155 may replace the advertisement image received from the broadcast receiving device 200 with the substitutional advertisement image and may display the substitutional advertisement image on the display 130. The substitutional advertisement image may be an image obtained by blending a UI image, which is created by the UI recognition module 157, by the DAR module 153. That is, the UI recognition program module 157 creates a UI image, and the DAR module 153 blends the created UI image with the advertisement image from the broadcast receiving device 200 to replace the advertisement image. According to an exemplary embodiment, the reproduction module 155 may output an audio signal, which is included in the substitutional advertisement, through a speaker (not illustrated) in synchronization with the substitutional advertisement image. According to an exemplary embodiment, the UI recognition module 157 may determine the UI image region in an image displayed on the display 130. For example, the UI recognition module 157 may calculate a spatial frequency of the image displayed on the display 130 and may calculate a noise level of the image displayed on the display 130 by using the calculated spatial frequency. The UI recognition module 157 may identify a region, which has the calculated noise level equal to or less than the specified level, of the image displayed on the display 130, thereby determining the UI image region. According to an exemplary embodiment, the UI recognition module 157 may store information on the determined UI image region in the memory 120 by matching the information on the determined UI image region with a control signal received from the remote control device 300 to control the broadcast receiving device 200. In other words, the UI recognition module 157 may store information on the determined UI image region, which corresponds to the control signal, in the memory 120.

According to an exemplary embodiment, in response to the DAR module 153 receiving a control signal (e.g., a control signal for channel change or a control signal to control a volume), which is for controlling the broadcast receiving device 200, from the remote control device 300, the DAR module 153 may confirm information on the UI image corresponding to the received control signal. The information on the UI image may be, for example, information on a region in which the UI image matched with the control signal is blended.

According to an exemplary embodiment, the DAR module 153 may not display a substitutional advertisement image on the display 130, when the information on the UI image corresponding to the control signal is stored. For example, the DAR module 153 may stop the reproduction of the substitutional advertisement image of the reproduction module 155 when the information on the UI image corresponding to the control signal is stored in the memory 120. Accordingly, the substitutional advertisement image may not be displayed on the display 130. According to an exemplary embodiment, the DAR module 153 may provide information on the substitutional advertisement image which is not displayed on the display 130. For example, the DAR module 153 may display, on the display 130, a UI image for notifying that the reproduction of the substitutional advertisement is stopped. For another example, the DAR module 153 may output, through a speaker (not illustrated), an audio signal for notifying that the reproduction of the substitutional advertisement is stopped.

According to an exemplary embodiment, when the information on the UI image corresponding to the control signal is not stored, the DAR module 153 may analyze the image displayed on the display 130 to analyze whether the UI image is blended. According to an exemplary embodiment, the DAR module 153 may store the analyzed information in the memory 120.

According to various exemplary embodiments described with reference to FIGS. 1 to 6, when a control signal to control the broadcast receiving device 200 is received from the remote control device 300, the display device 100 may calculate a noise level by using a spatial frequency of a broadcast image received from the broadcast server 800, may identify a region of the broadcast image, which has a noise level equal to or less than a specified level, to determine the UI image region in the broadcast image, and may store the UI image region by matching the UI image region with the control signal, thereby recognizing a blended UI image from the broadcast image displayed on the display 130 in response to the control signal being received from the remote control device, and providing various services (e.g., an substitutional advertisement service) for a user through the display 130 without restricting a UX, through the blended UI.

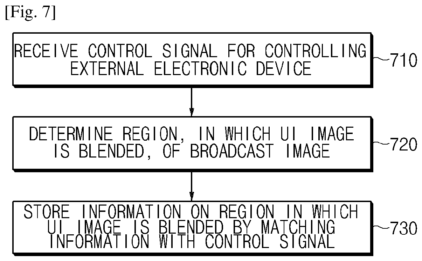

FIG. 7 is a flowchart illustrating a method of a display device, according to various exemplary embodiments.

The flowchart illustrated in FIG. 7 may include operations processed by the display device 100. Accordingly, even if the details of the display device 100 are omitted in the following description, the description of the display device 100 made with reference to FIGS. 1 to 6 will be applied to the flowchart of FIG. 7.

According to an exemplary embodiment, in operation 710, the display device 100 may receive a control signal for controlling the broadcast receiving device (or the external electronic device) 200. For example, the display device 100 may receive the control signal for controlling the broadcast receiving device 200, from the remote control device 300, as described above.

According to an exemplary embodiment, in operation 720, in response to receiving the control signal, the display device 100 may determine a UI image region in the broadcast image based on a noise level of a broadcast image displayed on the display 130. For example, the display device 100 may capture the broadcast image displayed on the display 130, may calculate the noise level by using a spatial frequency of the captured broadcast image, and may determine the region in which the UI image is blended by identifying a region of the broadcast image region, which has a noise level equal to or less than a specified level, as described above.

According to an exemplary embodiment, in operation 730, the display device 100 may store the information on the UI image region in the broadcast image in the memory 120 by matching with the information on the UI image region with the control signal received from the remote control device 300 to control the broadcast receiving device 200.

At least a part of an apparatus (e.g., modules or functions thereof) or a method (e.g., operations) according to various embodiments may be, for example, implemented by program code stored in a computer-readable storage media in the form of a program module. The program code, when executed by a processor (e.g., the processor 120), may cause the processor to perform a function corresponding to the program code. A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and an embedded memory. Also, the code may contain a code made by a compiler or a code executable by an interpreter

## Claims

1. A display device (100) comprising:
a communication interface (110) connected with an external electronic device;
a display (130);
a memory (120); and
a processor (140) configured to:
display a broadcast image (310) received from the external electronic device on the display;
receive a first control signal that is for controlling the external electronic device, wherein in response to the first control signal being received at the external electronic device, the external electronic device is arranged to blend a user interface, UI, image corresponding to the first control signal into the broadcast image (310);
capture the broadcast image (310) displayed on the display (130);
determine a noise level by using a spatial frequency calculated for one or both of each of the row lines of pixels included in the captured broadcast image (310) and each of the column lines of pixels included in the captured broadcast image (310);
determine a region, which has a noise level equal to or less than a specified level, as a user interface, UI, image region (311), which corresponds to the first control signal, in the broadcast image; and
store information relating to the UI image region (311) in the memory (120), the information including position of the UI image region (311) in the broadcast image (310);
wherein the processor is further configured to:
display a substitutional advertisement image on the display (130) received from an advertisement server (700); and
in response to a second control signal, that is for controlling the external electronic device, being received while displaying the substitutional advertisement image, wherein the substitutional advertisement image is displayed based on the stored information relating to the UI image region (310), stop displaying the substitutional advertisement image.

2. The display device of claim 1, wherein the processor is configured to:
determine the region, which has the noise level equal to or less than the specified level, of the broadcast image, as the UI image region in the broadcast image by passing the broadcast image displayed on the display through a high-pass filter (HPF) set to have a cut-off frequency corresponding to the specified level.

3. The display device of claim 1, wherein the specified level is determined based on a blending alpha (α) value of the UI image region.

4. The display device of claim 1, wherein the processor is configured to:
capture the broadcast image displayed on the display at a plurality of time points during which the same first control signal is received; and
determine the UI image region in the broadcast image, based on each of broadcast images captured at the plurality of time points.

5. The display device of claim 4, wherein the processor is configured to:
determine, as being the UI image region in the broadcast image, a region, which is determined as being the UI image region by a specified number of times or more, in each of the broadcast images captured at the plurality of time points.

6. The display device of claim 4, wherein the processor is configured to:
determine, as being the UI image region in the broadcast image, a common region between regions, which are determined as being the UI image region, in the broadcast images captured at the plurality of time points.

7. The display device of claim 1, wherein the processor is configured to:
determine at least one of a size and a shape of a UI image by using the information on the UI image region stored in the memory; and
recognize content of the UI image, based on the at least one of the size and the shape of the UI image.

8. The display device of claim 1, wherein the substitutional advertisement image is displayed by replacing the broadcast image with the substitutional advertisement image using the information on the UI image region matched with the first control signal.

9. A method comprising:
displaying a broadcast image (310) received from an external device on a display (130) of a display device (100);
receiving, by the display device (100), a first control signal that is for controlling the external electronic device. wherein in response to the first control signal being received at the external electronic device, the external electronic device is arranged to blend a user interface, UI, image corresponding to the first control signal into the broadcast image (310);
capturing the broadcast image (310) displayed on the display (130);
determining a noise level by using a spatial frequency calculated for one or both of each of row lines of pixels included in the captured broadcast image (310) and each of column lines of pixels included in the captured broadcast image (310);
determining a region, which has a noise level equal to or less than a specified level, as a user interface, UI, image region (311), which corresponds to the first control signal, in the broadcast image (310);
storing, by the display device (100), information relating to the UI image region (311) in a memory (120) of the display device (100), the information including position of the UI image region (311) in the broadcast image (310);
displaying a substitutional advertisement image on the display (130) received from an advertisement server (700); and
in response to a second control signal, that is for controlling the external electronic device, being received while displaying the substitutional advertisement image, wherein the substitutional advertisement image is displayed based on the stored information relating to the UI image region (310), stopping displaying the substitutional advertisement image.

## Patentansprüche

1. Anzeigevorrichtung (100), umfassend:
eine Kommunikationsschnittstelle (110), die mit einer externen elektronischen Vorrichtung verbunden ist;
eine Anzeige (130);
einen Speicher (120); und
einen Prozessor (140), der für Folgendes konfiguriert ist:
Anzeigen eines von der externen elektronischen Vorrichtung empfangenen Sendebildes (310) auf der Anzeige;
Empfangen eines ersten Steuersignals, das zum Steuern der externen elektronischen Vorrichtung dient, wobei als Reaktion darauf, dass das erste Steuersignal an der externen elektronischen Vorrichtung empfangen wird, die externe elektronische Vorrichtung angeordnet ist, um ein Benutzerschnittstellen-, UI-, Bild entsprechend dem ersten Steuersignal in dem Sendebild (310) einzublenden;
Erfassen des auf der Anzeige (130) angezeigten Sendebildes (310);
Bestimmen eines Rauschpegels unter Verwendung einer Raumfrequenz, die für eine oder beide von jeder der Reihenzeilen von Pixeln, die in dem erfassten Sendebild (310) enthalten sind, und jeder der Spaltenzeilen von Pixeln, die in dem erfassten Sendebild (310) enthalten sind, berechnet wird;
Bestimmen eines Bereichs, der einen Rauschpegel kleiner gleich ein spezifizierter Pegel aufweist, als einen Benutzerschnittstellen-, UI-, Bildbereich (311), der dem ersten Steuersignal entspricht, in dem Sendebild; und
Speichern von Informationen bezüglich des UI-Bildbereichs (311) in dem Speicher (120), wobei die Informationen die Position des UI-Bildbereichs (311) in dem Sendebild (310) einschließen;
wobei der Prozessor ferner für Folgendes konfiguriert ist:
Anzeigen eines Ersatzwerbebildes auf der Anzeige (130), das von einem Werbeserver (700) empfangen wird; und
als Reaktion darauf, dass ein zweites Steuersignal, das zum Steuern der externen elektronischen Vorrichtung dient, empfangen wird, während das Ersatzwerbebild angezeigt wird, wobei das Ersatzwerbebild basierend auf den gespeicherten Informationen in Bezug auf den UI-Bildbereich (310) angezeigt wird, Stoppen der Anzeige des Ersatzwerbebildes.

2. Anzeigevorrichtung nach Anspruch 1, wobei der Prozessor für Folgendes konfiguriert ist:
Bestimmen des Bereichs, dessen Rauschpegel kleiner gleich der spezifizierte Pegel ist, des Sendebildes als UI-Bildbereich im Sendebild, indem das auf der Anzeige angezeigte Sendebild durch einen Hochpassfilter (HPF) geleitet wird, der auf eine Grenzfrequenz eingestellt ist, die dem spezifizierten Pegel entspricht.

3. Anzeigevorrichtung nach Anspruch 1, wobei der spezifizierte Pegel basierend auf einem Blende-Alpha(a)-Wert des UI-Bildbereichs bestimmt wird.

4. Anzeigevorrichtung nach Anspruch 1, wobei der Prozessor für Folgendes konfiguriert ist:
Erfassen des auf der Anzeige angezeigten Sendebildes zu einer Vielzahl von Zeitpunkten, während denen das gleiche erste Steuersignal empfangen wird; und
Bestimmen des UI-Bildbereichs in dem Sendebild basierend auf jedem der Sendebilder, die zu der Vielzahl von Zeitpunkten erfasst wurden.

5. Anzeigevorrichtung nach Anspruch 4, wobei der Prozessor für Folgendes konfiguriert ist:
Bestimmen, als UI-Bildbereich in dem Sendebild, eines Bereichs, für den bestimmt wird, dass er in jedem der zu der Vielzahl von Zeitpunkten erfassten Sendebilder dem UI-Bildbereich für eine spezifizierte Anzahl von Zeiten oder mehr entspricht.

6. Anzeigevorrichtung nach Anspruch 4, wobei der Prozessor für Folgendes konfiguriert ist:
Bestimmen, als UI-Bildbereich in dem Sendebild, eines gemeinsamen Bereichs zwischen Bereichen, die als der UI-Bildbereich bestimmt werden, in den Sendebildern, die zu der Vielzahl Zeitpunkten erfasst wurden.

7. Anzeigevorrichtung nach Anspruch 1, wobei der Prozessor für Folgendes konfiguriert ist:
Bestimmen von mindestens einer von einer Größe und einer Form eines UI-Bildes unter Verwendung der Informationen über den UI-Bildbereich, die in dem Speicher gespeichert sind; und
Erkennen des Inhalts des UI-Bildes, basierend auf dem mindestens einen der Größe und Form des UI-Bildes.

8. Anzeigevorrichtung nach Anspruch 1, wobei das Ersatzwerbebild angezeigt wird, indem das Sendebild unter Verwendung der Informationen über den UI-Bildbereich, die mit dem ersten Steuersignal übereinstimmen, durch das Ersatzwerbebild ersetzt wird.

9. Verfahren, umfassend:
Anzeigen eines von einer externen Vorrichtung empfangenen Sendebildes (310) auf einer Anzeige (130) einer Anzeigevorrichtung (100);
Empfangen eines ersten Steuersignals, das zum Steuern der externen elektronischen Vorrichtung dient, durch die Anzeigevorrichtung (100), wobei als Reaktion darauf, dass das erste Steuersignal an der externen elektronischen Vorrichtung empfangen wird, die externe elektronische Vorrichtung angeordnet ist, um ein Benutzerschnittstellen-, UI-, Bild entsprechend dem ersten Steuersignal in dem Sendebild (310) einzublenden;
Erfassen des auf der Anzeige (130) angezeigten Sendebildes (310);
Bestimmen eines Rauschpegels unter Verwendung einer Raumfrequenz, die für eine oder beide von jeder der Reihenzeilen von Pixeln, die in dem erfassten Sendebild (310) enthalten sind und jeder der Spaltenzeilen von Pixeln, die in dem erfassten Sendebild (310) enthalten sind, berechnet wird;
Bestimmen eines Bereichs, der einen Rauschpegel kleiner gleich ein spezifizierter Pegel aufweist, als einen Benutzerschnittstellen-, UI-, Bildbereich (311), der dem ersten Steuersignal entspricht, in dem Sendebild (310);
Speichern von Informationen bezüglich des UI-Bildbereichs (311) in einem Speicher (120) der Anzeigevorrichtung (100) durch die Anzeigevorrichtung (100), wobei die Informationen die Position des UI-Bildbereichs (311) in dem Sendebild (310) einschließen;
Anzeigen eines Ersatzwerbebildes auf der Anzeige (130), das von einem Werbeserver (700) empfangen wird; und
als Reaktion darauf, dass ein zweites Steuersignal, das zum Steuern der externen elektronischen Vorrichtung dient, empfangen wird, während das Ersatzwerbebild angezeigt wird, wobei das Ersatzwerbebild basierend auf den gespeicherten Informationen in Bezug auf den UI-Bildbereich (310) angezeigt wird, Stoppen der Anzeige des Ersatzwerbebildes.

## Revendications

1. Dispositif d'affichage (100), comprenant :
une interface de communication (110) connectée à un dispositif électronique externe ;
un élément d'affichage (130) ;
une mémoire (120) ; et
un processeur (140) configuré pour :
afficher une image diffusée (310) reçue en provenance du dispositif électronique externe sur l'élément d'affichage ;
recevoir un premier signal de commande qui est destiné à commander le dispositif électronique externe, en réponse au premier signal de commande reçu au niveau du dispositif électronique externe, ledit dispositif électronique externe étant agencé pour mêler une image d'interface utilisateur, UI, correspondant au premier signal de commande à l'image diffusée (310) ;
capturer l'image diffusée (310) affichée sur l'élément d'affichage (130) ;
déterminer un niveau de bruit à l'aide d'une fréquence spatiale calculée pour l'une ou les deux de chacune des lignes de rangées de pixels comprises dans l'image de diffusion capturée (310) et chacune des lignes de colonnes de pixels comprises dans l'image de diffusion capturée (310) ;
déterminer une zone, qui présente un niveau de bruit inférieur ou égal à un niveau spécifié, en tant que zone d'image d'interface utilisateur, UI, (311), qui correspond au premier signal de commande, dans l'image diffusée ; et
stocker des informations relatives à la zone d'image UI (311) dans la mémoire (120), les informations comprenant la position de la zone d'image UI (311) dans l'image diffusée (310) ;
ledit processeur étant en outre configuré pour :
afficher une image publicitaire de substitution sur l'élément d'affichage (130) reçu en provenance d'un serveur publicitaire (700) ; et
en réponse à un second signal de commande, qui est destiné à commander le dispositif électronique externe, reçu pendant l'affichage de l'image publicitaire de substitution, ladite image publicitaire de substitution étant affichée sur la base des informations stockées relatives à la zone d'image UI (310), arrêter l'affichage de l'image publicitaire de substitution.

2. Dispositif d'affichage selon la revendication 1, ledit processeur étant configuré pour :
déterminer la zone, qui présente le niveau de bruit inférieur ou égal au niveau spécifié, de l'image diffusée, en tant que zone d'image UI dans l'image diffusée en faisant passer l'image diffusée affichée sur l'élément d'affichage à travers un filtre passe-haut (HPF) réglé pour posséder une fréquence de coupure correspondant au niveau spécifié.

3. Dispositif d'affichage selon la revendication 1, ledit niveau spécifié étant déterminé sur la base d'une valeur alpha (α) de mélange de la zone d'image UI.

4. Dispositif d'affichage selon la revendication 1, ledit processeur étant configuré pour :
capturer l'image diffusée affichée sur l'élément d'affichage à une pluralité d'instants durant lesquels le même premier signal de commande est reçu ; et
déterminer la zone d'image UI dans l'image diffusée, sur la base de chacune des images diffusées capturées à la pluralité d'instants.

5. Dispositif d'affichage selon la revendication 4, ledit processeur étant configuré pour :
déterminer, en tant que zone d'image UI dans l'image diffusée, une zone, qui est déterminée en tant que zone d'image UI par un nombre spécifié de fois ou plus, dans chacune des images diffusées capturées à la pluralité d'instants.

6. Dispositif d'affichage selon la revendication 4, ledit processeur étant configuré pour :
déterminer, en tant que zone d'image UI dans l'image diffusée, une zone commune entre les zones, qui sont déterminées en tant que zone d'image UI, dans les images diffusées capturées à la pluralité d'instants.

7. Dispositif d'affichage selon la revendication 1, ledit processeur étant configuré pour :
déterminer au moins l'une d'une taille et d'une forme d'une image UI à l'aide des informations sur la zone d'image UI stockées dans la mémoire ; et
reconnaître le contenu de l'image UI, sur la base de l'au moins une de la taille et de la forme de l'image UI.

8. Dispositif d'affichage selon la revendication 1, ladite image publicitaire de substitution étant affichée en remplaçant l'image diffusée par l'image publicitaire de substitution à l'aide des informations sur la zone d'image UI correspondant au premier signal de commande.

9. Procédé comprenant :
l'affichage d'une image diffusée (310) reçue en provenance d'un dispositif externe sur un élément d'affichage (130) d'un dispositif d'affichage (100) ;
la réception, par le dispositif d'affichage (100), d'un premier signal de commande qui est destiné à commander le dispositif électronique externe, en réponse au premier signal de commande reçu au niveau du dispositif électronique externe, ledit dispositif électronique externe étant agencé pour mêler une image d'interface utilisateur, UI, correspondant au premier signal de commande dans l'image diffusée (310) ;
la capture de l'image diffusée (310) affichée sur l'élément d'affichage (130) ;
la détermination d'un niveau de bruit à l'aide d'une fréquence spatiale calculée pour l'une ou les deux de chacune des lignes de rangées de pixels comprises dans l'image diffusée capturée (310) et chacune des lignes de colonnes de pixels comprises dans l'image diffusée capturée (310) ;
la détermination d'une zone, qui présente un niveau de bruit inférieur ou égal à un niveau spécifié, en tant que zone d'image d'interface utilisateur, UI, (311), qui correspond au premier signal de commande, dans l'image diffusée (310) ;
le stockage, par le dispositif d'affichage (100), d'informations relatives à la zone d'image UI (311) dans une mémoire (120) du dispositif d'affichage (100), les informations comprenant la position de la zone d'image UI (311) dans l'image diffusée (310) ;
l'affichage d'une image publicitaire de substitution sur l'élément d'affichage (130) reçu en provenance d'un serveur publicitaire (700) ; et
en réponse à un second signal de commande, qui est destiné à commander le dispositif électronique externe, reçu pendant l'affichage de l'image publicitaire de substitution, ladite image publicitaire de substitution étant affichée sur la base des informations stockées relatives à la zone d'image UI (310), l'arrêt de l'affichage de l'image publicitaire de substitution.
